# EUROPEAN PATENT APPLICATION

(11) **EP 2 907 742 A1**
(43) Date of publication of application: **19.08.2015**
(21) Application number: 13846121.5
(22) Date of filing: 23.07.2013
(51) Int. Cl.: B63H 25/42, B63H 20/00

(54) **SYSTEM FOR CONTROLLING SHIP, METHOD FOR CONTROLLING SHIP, AND PROGRAM**

(30) Priority: 11.10.2012 JP 2012226234
(71) Applicant: Suzuki Motor Corporation, Shizuoka-ken 432-8611 (JP)
(72) Inventor: MORIKAMI, Tadaaki, Hamamatsu-shi Shizuoka 432-8611 (JP); NISHIO, Masaya, Hamamatsu-shi Shizuoka 432-8611 (JP); MIYOSHI, Takanori, Toyohashi-shi Aichi 441-8580 (JP); YUMIBA, Toyohiro, Toyohashi-shi Aichi 441-8580 (JP)
(74) Representative: Viering, Jentschura & Partner Patent- und Rechtsanwälte
(86) International application number: PCT/JP2013/069922
(87) International publication number: WO 2014/057723

(57) **Abstract**

A boat operating system has two outboard motors (3R, 3L) and a helm controller. The helm controller moves the boat (1) in parallel in a lateral direction by performing steering so that extended lines of propulsive forces (P, Q) of the two outboard motors (3R, 3L) pass a movement center (G) located on a center line (C) of the boat (1), and causing shift directions of the two outboard motors (3R, 3L) to be reversed from each other, judges whether or not the boat (1) is turning in a horizontal direction, and moves an intersection (M) of the extended lines of propulsive forces (P, Q) of the two outboard motors (3R, 3L) and the center line (C) of the boat (1) in a direction of either forward or backward from the movement center (G) when it is judged that the boat (1) is turning while the boat (1) is moved in parallel in the lateral direction.

## Description

### TECHNICAL FIELD

The present invention relates to a control system for a boat, a control method for a boat, and a program. In particular, the present invention relates to a control system for a boat, a control method for a boat, and a program which enable to move a boat in parallel in a lateral direction by controlling the directions of propulsive forces of two outboard motors.

### BACKGROUND ART

When a boat is being moored at a pier, the boat may be moved in parallel in a lateral direction. A structure capable of moving the boat in parallel in a lateral direction is, for example, described in Patent Literature 1. In the structure described in Patent Literature 1, two outboard motors are mounted side by side at the stern, and by controlling directions of propulsive forces of these two outboard motors, it is possible to make the boat travel in a desired direction. Then by controlling the propulsive forces of the two outboard motors so that they pass a moving center of the boat, it is possible to move the boat in parallel in a lateral direction.

However, the boat has an underwater resistance center point which is located in water below the surface of the water and is affected by waves and water flows and a wind pressure center point which is located above the surface of the water and affected by winds, and these points are generally present at different positions. In order to move the boat in parallel in a lateral direction as described above, it is necessary to accurately comprehend the point where rotational moments in a horizontal direction of reaction forces operating at the above-described resistance center point of the boat in water and the wind pressure center point above the surface of the water balance with each other, and to precisely control the outboard motors so that the propulsive forces of the two outboard motors pass the point where the rotational moments in the horizontal direction balance with each other. When the balance of the rotational moments in the horizontal direction is lost, the boat starts to make a turn that is not intended by the operator.

In an actual use state, the position of the point where the rotational moments in the horizontal direction balance with each other changes depending on directions and strengths of waves, water flows and winds with respect to the boat. Thus, the operator needs to constantly correct the angles of the outboard motors. Thus, in order to move the boat in parallel in a lateral direction without making a turn, the operator needs to be skilled in boat operation.

### CITATION LIST

### PATENT LITERATURE

Patent Literature 1: Japanese Laid-open Patent Publication No. 01-285486

### SUMMARY OF INVENTION

### TECHNICAL PROBLEM

In view of the above situation, an object to be solved by the present invention is to provide a control system for a boat, a control method for a boat, and a program which can prevent turning of a boat while a parallel movement in a lateral direction is made.

### SOLUTION TO PROBLEM

In order to solve the above problems, a control system for a boat of the present invention is a control system for a boat which has at least two outboard motors and is capable of moving the boat in parallel in a lateral direction, the control system including: a control means which moves the boat in parallel in a lateral direction by performing steering so that extended lines of propulsive forces of the two outboard motors pass a movement center located on a center line of the boat, and causing shift directions of the two outboard motors to be reversed from each other; a turn judging means which judges whether or not the boat is turning in a horizontal direction; and a correcting means which moves an intersection of the extended lines of propulsive forces of the two outboard motors and the center line of the boat in a direction of either forward or backward from the movement center when the turn judging means judges that the boat is turning while the boat is moved in parallel in the lateral direction.

Further, a control method for a boat of the present invention is a control method for a boat which has two outboard motors and is capable of moving the boat in parallel in a lateral direction, the control method including the steps of: moving the boat in parallel in a lateral direction by performing steering so that extended lines of propulsive forces of the two outboard motors pass a movement center located on a center line of the boat, and causing shift directions of the two outboard motors to be reversed from each other; judging whether or not the boat is turning in a horizontal direction; and moving an intersection of the extended lines of propulsive forces of the two outboard motors and the center line of the boat in a direction of either forward or backward from the movement center when it is judged that the boat is turning while the boat is moved in parallel in the lateral direction.

A program of the present invention is a program causing a computer of a control system for a boat which has two outboard motors and is capable of moving the boat in parallel in a lateral direction to execute the steps of: moving the boat in parallel in a lateral direction by performing steering so that extended lines of propulsive forces of the two outboard motors pass a movement center located on a center line of the boat, and causing shift directions of the two outboard motors to be reversed from each other; judging whether or not the boat is turning in a horizontal direction; and moving an intersection of the extended lines of propulsive forces of the two outboard motors and the center line of the boat in a direction of either forward or backward from the movement center when it is judged that the boat is turning while the boat is moved in parallel in the lateral direction.

### ADVANTAGEOUS EFFECTS OF INVENTION

According to the present invention, when a boat turns while moving in parallel in a lateral direction, a propulsive force to turn in the reverse direction of the turning direction can be applied to the boat. Therefore, the posture of the boat can be corrected, and the boat can be moved in parallel without turning.

### BRIEF DESCRIPTION OF DRAWINGS

[Fig. 1] Fig. 1 is a perspective view seeing a boat from an oblique rear side.
[Fig. 2] Fig. 2 is a block diagram illustrating a configuration of a boat operating system.
[Fig. 3] Fig. 3 is a flowchart illustrating contents of a control method for moving the boat in parallel in a lateral direction.
[Fig. 4A] Fig. 4A is a plan view schematically illustrating a state of outboard motors and a behavior of the boat and is a view seen from a top side.
[Fig. 4B] Fig. 4B is a plan view schematically illustrating a state of outboard motors and a behavior of the boat and is a view seen from a top side.
[Fig. 4C] Fig. 4C is a plan view schematically illustrating a state of outboard motors and a behavior of the boat and is a view seen from a top side.
[Fig. 4D] Fig. 4D is a plan view schematically illustrating a state of outboard motors and a behavior of the boat and is a view seen from a top side.
[Fig. 5A] Fig. 5A is a plan view schematically illustrating a state of outboard motors and a behavior of the boat and is a view seen from a top side.
[Fig. 5B] Fig. 5B is a plan view schematically illustrating a state of outboard motors and a behavior of the boat and is a view seen from a top side.
[Fig. 5C] Fig. 5C is a plan view schematically illustrating a state of outboard motors and a behavior of the boat and is a view seen from a top side.
[Fig. 5D] Fig. 5D is a plan view schematically illustrating a state of outboard motors and a behavior of the boat and is a view seen from a top side.
[Fig. 6A] Fig. 6A is a plan view schematically illustrating a state of outboard motors and a behavior of the boat and is a view seen from a top side.
[Fig. 6B] Fig. 6B is a plan view schematically illustrating a state of outboard motors and a behavior of the boat and is a view seen from a top side.
[Fig. 6C] Fig. 6C is a plan view schematically illustrating a state of outboard motors and a behavior of the boat and is a view seen from a top side.
[Fig. 6D] Fig. 6D is a plan view schematically illustrating a state of outboard motors and a behavior of the boat and is a view seen from a top side.
[Fig. 7A] Fig. 7A is a plan view schematically illustrating a state of outboard motors and a behavior of the boat and is a view seen from a top side.
[Fig. 7B] Fig. 7B is a plan view schematically illustrating a state of outboard motors and a behavior of the boat and is a view seen from a top side.
[Fig. 7C] Fig. 7C is a plan view schematically illustrating a state of outboard motors and a behavior of the boat and is a view seen from a top side.
[Fig. 7D] Fig. 7D is a plan view schematically illustrating a state of outboard motors and a behavior of the boat and is a view seen from a top side.
[Fig. 8A] Fig. 8A is a diagram schematically illustrating a behavior of a boat according to an example of the present invention.
[Fig. 8B] Fig. 8B is a diagram schematically illustrating a behavior of a boat according to a comparative example.

### DESCRIPTION OF EMBODIMENTS

Hereinafter, with reference to attached drawings, preferred embodiments of the present invention will be described. In the drawings, a front side of a boat 1 is denoted by an arrow "Fr", a rear side is denoted by an arrow "Rr", a right side is denoted by an arrow "R", and a left side is denoted by an arrow "L" as appropriate.

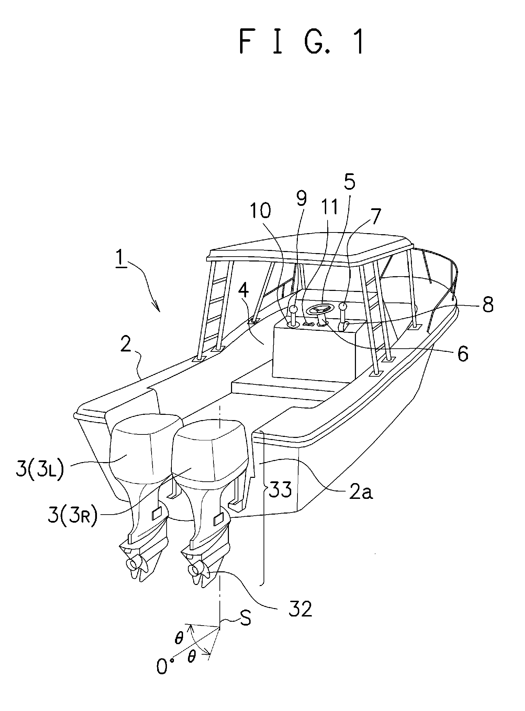

Fig. 1 is a perspective view seeing the boat 1 from an oblique rear side. As illustrated in Fig. 1, on a transom 2a located in a rear part of a hull 2 of the boat 1, plural outboard motors, in each of which an engine is mounted, are attached via brackets. In this embodiment, a structure in which two outboard motors 3 (outboard motor 3R on the right side and an outboard motor 3L on the left side) are attached is described. The two outboard motors 3R, 3L are attached to bilaterally symmetrical positions across a center line of the boat 1. Note that the center line of the boat 1 refers to a straight line extending in a forward and backward direction and passing through a movement center of the boat 1. The movement center of the boat 1 refers to a point where rotational moments in a horizontal direction of reaction forces balance with each other, the reaction forces operating at the resistance center point of the boat under water and the wind pressure center point above the surface of the water.

At a substantially center of the hull 2, an operator compartment 4 is provided. In the operator compartment 4, as operating devices for operating the boat 1, a helm 5, a remote controller box 7, a joystick 10, and a changeover switch 11 are disposed. Besides them, in the operator compartment 4, a display device which displays information related to the boat 1 is disposed.

The helm 5 has a steering wheel 6 used for steering the boat. The remote controller box 7 has a remote controller level 8 for changing a shift position and a shift amount. The operator normally operates the boat by operating the steering wheel 6 of the helm 5 and the remote controller level 8 of the remote controller box 7.

The joystick 10 has a lever 9 for operating the boat 1. The lever 9 of the joystick 10 can be tilted and can be rotated in an arbitrary direction from a neutral position. Then the boat 1 makes a movement according to an operating mode of the joystick 10. When the operator desires to finely control behaviors of the boat 1 such as when berthing, the operator operates the boat with the joystick 10. For example, the operator can make the boat 1 travel forward by tilting the lever 9 of the joystick 10 forward, or can make the boat 1 travel backward by tilting the lever 9 backward. Further, the operator can make the boat 1 travel in parallel rightward or leftward by tilting the lever 9 of the joystick 10 rightward or leftward. Thus, the operator can berth the boat 1 by tilting the lever 9 of the joystick 10 rightward or leftward.

The changeover switch 11 is a switch for switching whether the boat is operated by using the helm 5 and the remote controller box 7 or operated by using the joystick 10.

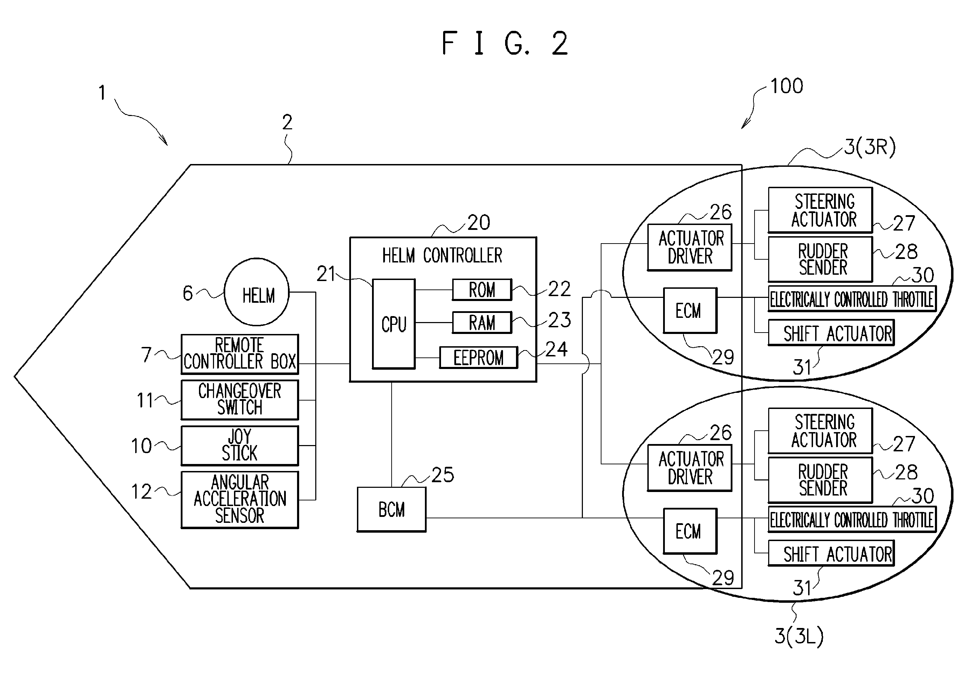

Next, a control system for a boat (hereinafter referred to as a boat operating system 100) will be described with reference to Fig. 2. Fig. 2 is a block diagram illustrating a configuration of the boat operating system 100. To the boat operating system 100 of this embodiment, a shift-by-wire method, a throttle-by-wire method, and a steering-by-wire method are applied. Specifically, information from the helm 5, the remote controller box 7 and the joystick 10 is transmitted electrically to a helm controller 20, and the helm controller 20 controls the two outboard motors 3R, 3L by electrical signals.

The boat operating system 100 has the above-described helm 5, remote controller box 7, joystick 10, and changeover switch 11. Moreover, the boat operating system 100 has an angular acceleration sensor 12, the helm controller 20, a BCM 25, and the two outboard motors 3R, 3L.

The helm 5 has the above-described steering wheel 6 and a steering sensor. The steering wheel 6 is a rotatable operating member. The steering sensor detects an operation of the steering wheel 6 and outputs information related to the operation to the helm controller 20. The information related to the operation of the steering wheel 6 includes, for example, information related to a rotation angle and a rotation direction.

The remote controller box 7 has the remote controller level 8 and a lever sensor. The remote controller level 8 is an operating member which is tiltable in a forward and backward direction from a neutral position. The lever sensor detects an operation of the remote controller level 8 and outputs information related to the operation to the helm controller 20. The information related to the operation includes, for example, information related to a tilt direction and a tilt angle. Hereinafter, the tilt angle and the tilt direction of the remote controller level 8 will be referred to as a shift position.

The joystick 10 has a lever 9 and a lever sensor. The lever 9 of the joystick 10 is an operating member tiltable and rotatable in an arbitrary direction through 360°. The lever sensor of the joystick 10 detects an operation of the lever 9 of the joystick 10 and outputs information related to the detected operation to the helm controller 20. The information related to the operation of the lever 9 of the joystick 10 includes a tilt angle and a tilt direction of the lever 9, and a rotation angle and a rotation direction of the lever 9.

The changeover switch 11 detects a select position selected by the operator, and outputs information of the detected select position to the helm controller 20. According to the select position detected by the changeover switch 11, the helm controller 20 validates only one of operation of the helm 5 and the remote controller box 7 and operation of the joystick 10, and invalidates operation of the other.

The angular acceleration sensor 12 is attached to the hull 2. Then, the angular acceleration sensor 12 detects an angular acceleration when the hull 2 rotates in a horizontal direction. The angular acceleration sensor 12 outputs information of the detected angular acceleration to the helm controller 20.

The helm controller 20 functions as a control device controlling the two outboard motors 3R, 3L. The helm controller 20 is electrically connected to the helm 5, the remote controller box 7, the joystick 10, the changeover switch 11, the angular acceleration sensor 12, the BCM 25, and the two outboard motors 3R, 3L

A computer including a CPU 21, a ROM 22, a RAM 23, an EEPROM 24, and so on is applied to the helm controller 20.

The CPU 21 realizes processing of a flowchart which will be described later by executing a computer program stored in the ROM 22. The ROM 22 is a non-volatile memory and stores computer programs executed by the CPU 21, setting values for controlling the outboard motors 3R, 3L, and the like. The RAM 23 is a volatile memory and temporarily stores information and the like calculated when the CPU 21 controls the outboard motors 3R, 3L. Further, the RAM 23 is used as a work area when the CPU 21 executes a computer program. The EEPROM 24 is a rewritable non-volatile memory. The EEPROM 24 stores various types of information used when the CPU 21 controls the outboard motors 3R, 3L.

The BCM 25 (boat control module) is electrically connected to the helm controller 20 and to respective ECMs 29 of the outboard motors 3R, 3L. The BCM 25 transmits instructions from the helm controller 20 to the ECMs 29. Similarly to the helm controller 20, a computer including a CPU, a ROM, a RAM, an EEPROM, and so on is applied to the BCM 25. Note that in the boat operating system 100 of this embodiment, the BCM 25 can be omitted. In this case, the helm controller 20 is electrically connected directly to the respective ECMs 29 of the outboard motors 3R, 3L to transmit instructions.

Next, a structure of the outboard motors 3R, 3L will be described. The same structure can be applied to the two outboard motors 3R, 3L.

The outboard motors 3R, 3L has an actuator driver 26, a steering actuator 27, a rudder sender 28, an ECM 29, an electrically controlled throttle 30, and a shift actuator 31.

The actuator driver 26 is electrically connected to the steering actuator 27 and the rudder sender 28. Then the actuator driver 26 drives the steering actuator 27 based on instructions from the ECM 29.

The steering actuator 27 changes a rudder angle *θ* of the outboard motor 3R, 3L according to instructions from the helm controller 20 via the actuator driver 26. For example, as illustrated in Fig. 1, the steering actuator 27 turns a propulsion unit 33 including a propeller about a steering axis (dot and dash line S) leftward or rightward up to a predetermined angle α.

The rudder sender 28 detects an actual rudder angle θ of the outboard motor 3R, 3L and outputs it to the actuator driver 26. Then, the actuator driver 26 can obtain information of the actual rudder angle θ detected by the rudder sender 28, so as to drive the steering actuator 27 to be at the rudder angle θ instructed by the helm controller 20. Further, the actuator driver 26 outputs the actual rudder angle θ obtained from the rudder sender 28 to the helm controller 20.

The ECM 29 (engine control module) is electrically connected to the electrically controlled throttle 30 and the shift actuator 31, and controls the electrically controlled throttle 30 and the shift actuator 31.

The electrically controlled throttle 30 has a throttle valve, an actuator which adjusts opening of the throttle valve, and a TPS (throttle position sensor) which detects the opening of the throttle valve. The actuator of the electrically controlled throttle 30 changes the opening of the throttle valve according to instructions from the helm controller 20 via the BCM 25 and the ECM 29. By increasing the opening of the throttle valve, output of the engine of the outboard motor 3R, 3L is increased, thereby increasing the propulsive force of the outboard motor 3R, 3L. On the other hand, by decreasing the opening of the throttle valve, output of the outboard motor 3R, 3L is decreased, thereby decreasing the propulsive force of the outboard motor 3R, 3L.

Further, the ECM 29 controls a fuel injection amount based on the detection result of opening of the throttle valve from the TPS.

The shift actuator 31 switches the shift of the outboard motor 3R, 3L according to an instruction from the helm controller 20 via the BCM 25 and the ECM 29. For example, when there is an instruction to switch the shift from the helm controller 20, the shift actuator 31 drives a reverser in the propulsion unit 33 of the outboard motor 3R, 3L to switch the reverser to a forward position or a reverse position according to the instruction.

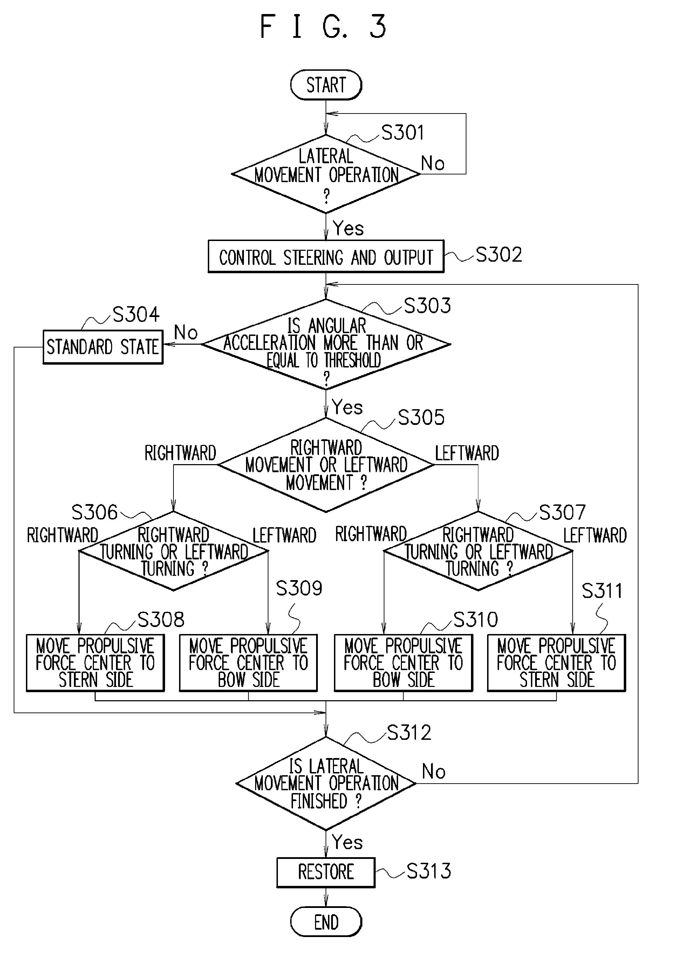

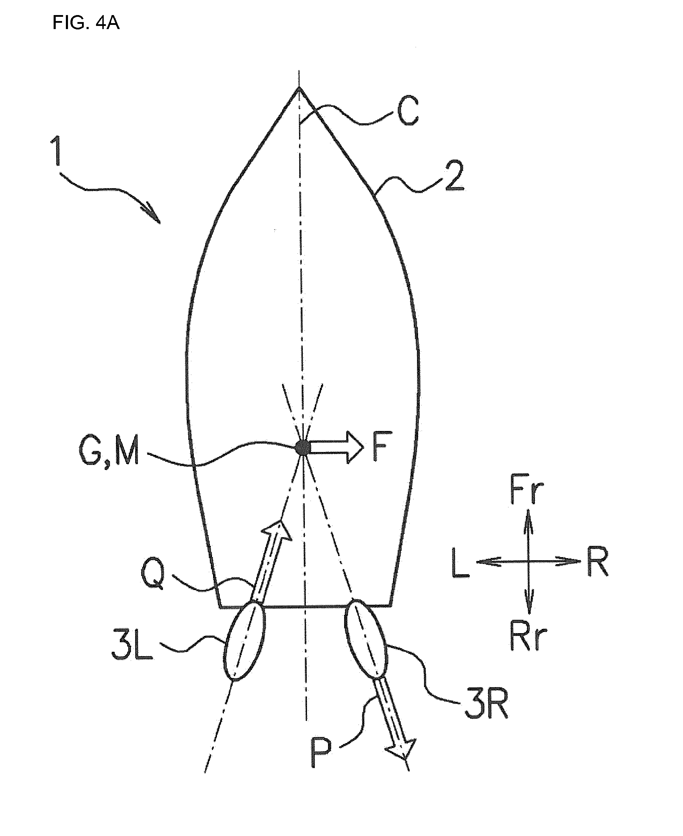

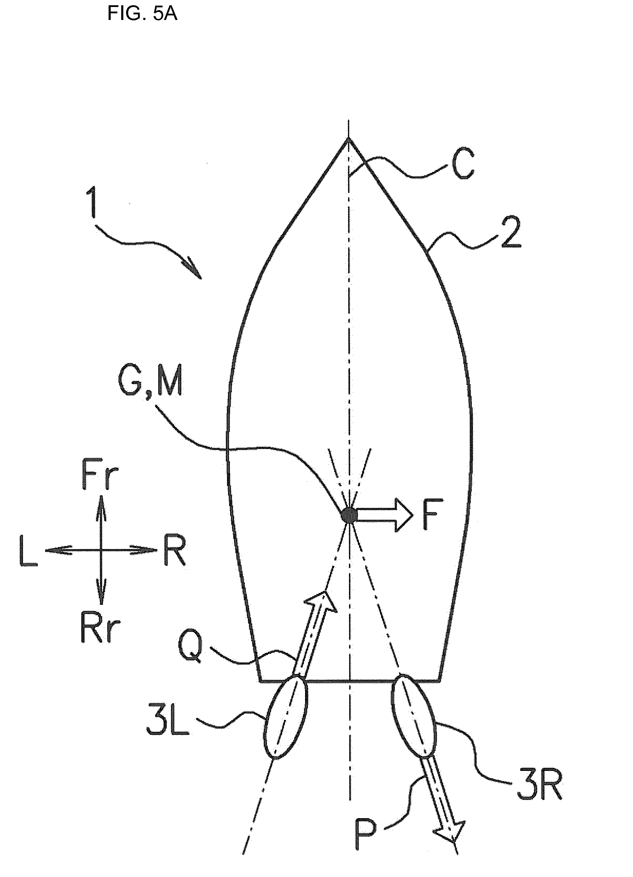

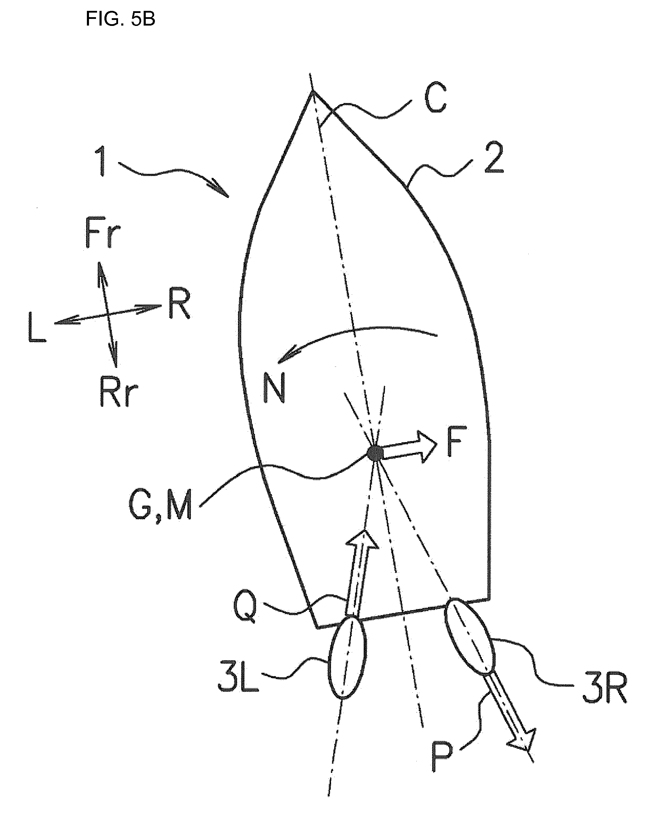

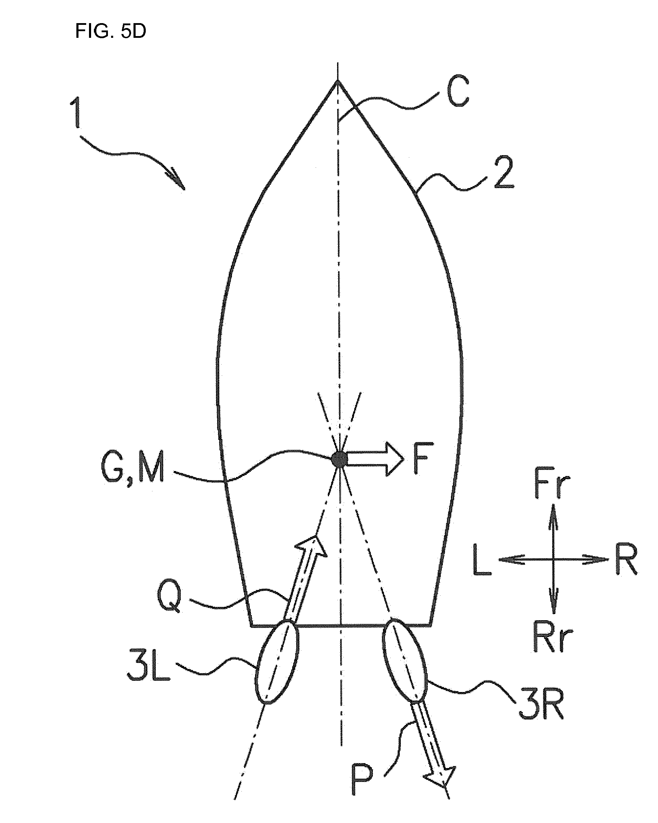

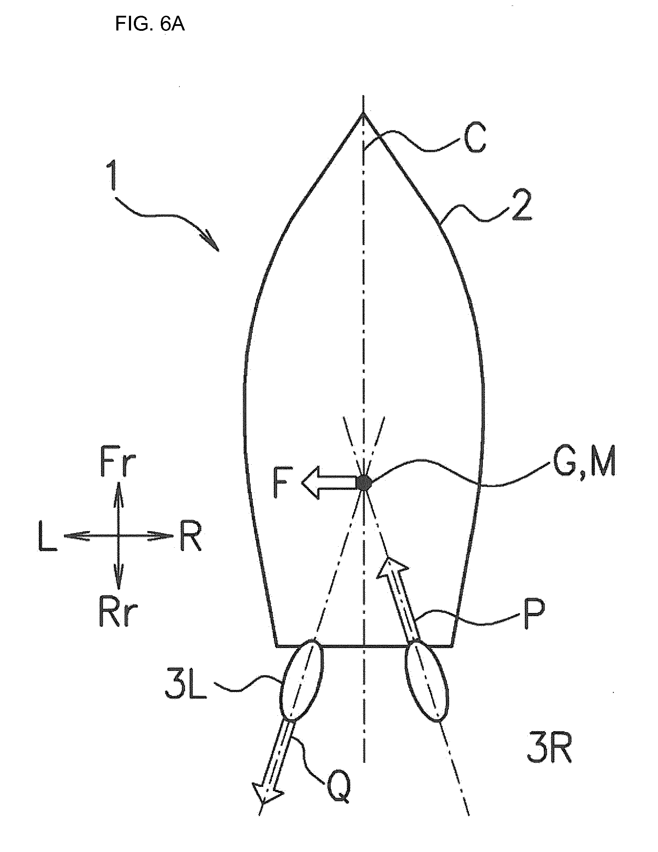

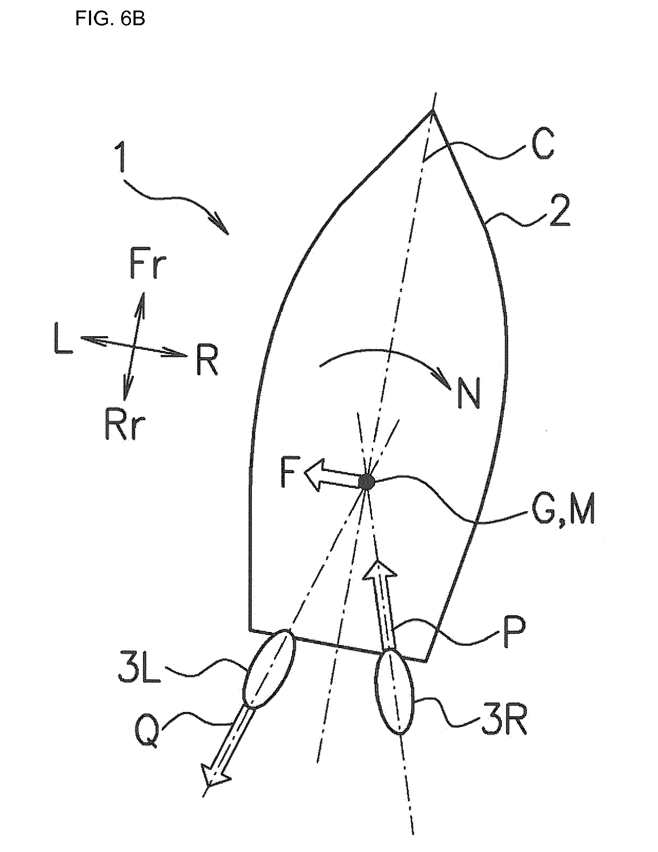

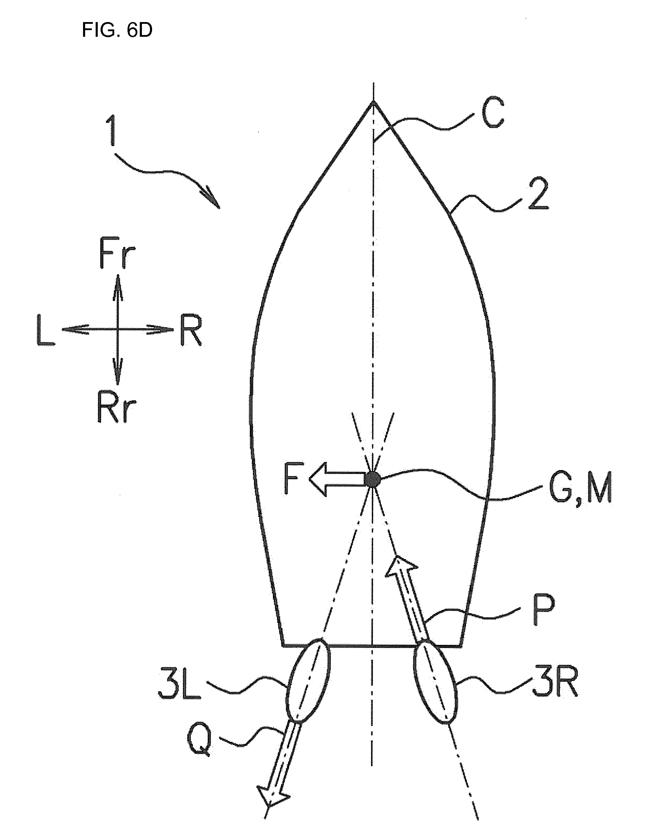

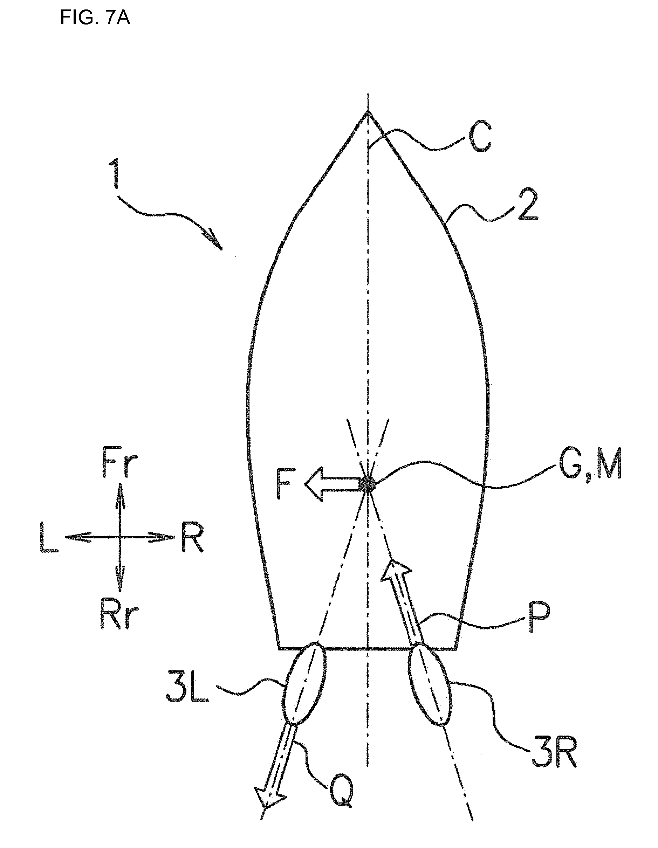

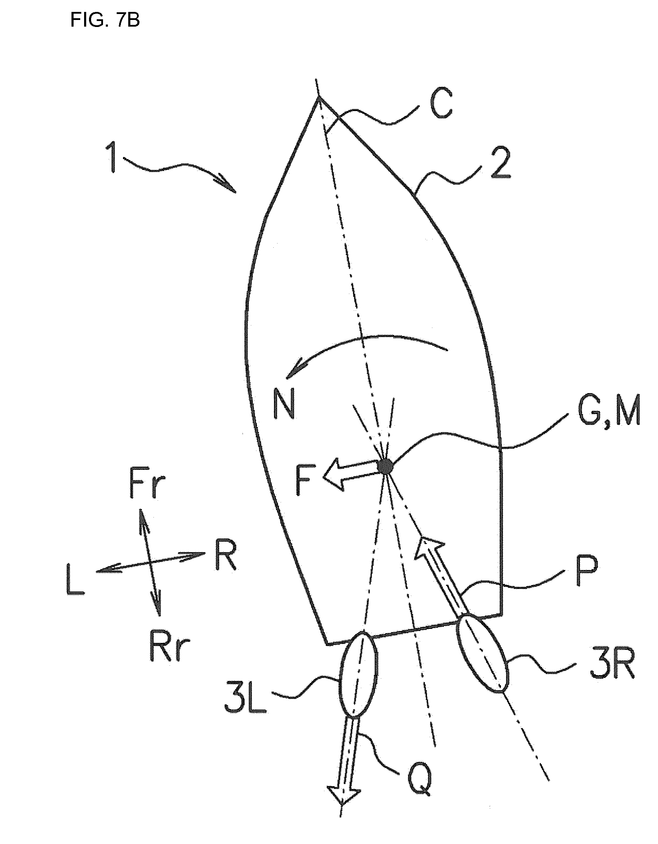

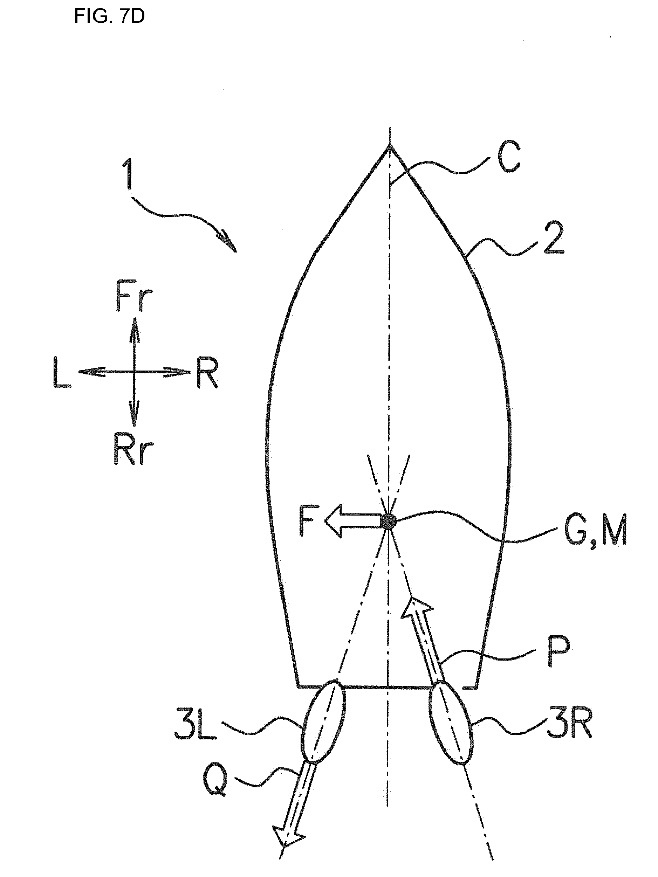

Next, a control method for moving the boat 1 in parallel in a lateral direction will be described with reference to Fig. 3 to Fig. 7D. Fig. 3 is a flowchart illustrating contents of the control method for moving the boat 1 in parallel in a lateral direction. Fig. 4A to Fig. 7D are plan views schematically illustrating states of the outboard motors 3R, 3L and behaviors of the boat 1 and are views seen from a top side. Specifically, Fig. 4A to Fig. 4D illustrate the case where the boat 1 turns rightward while the boat 1 is moved in a rightward direction. Fig. 5A to Fig. 5D illustrate the case where the boat 1 turns leftward while the boat 1 is moved in the rightward direction. Fig. 6A to Fig. 6D illustrate the case where the boat 1 turns rightward while the boat 1 is moved in a leftward direction. Fig. 7A to Fig. 7D illustrate the case where the boat 1 turns leftward while the boat 1 is moved in the leftward direction. Further, in Fig. 4A to Fig. 7D, an arrow P denotes the direction of a propulsive force of the right outboard motor 3R, an arrow Q denotes the direction of a propulsive force of the left outboard motor 3L, and an arrow F denotes the direction of a combined propulsive force by the two outboard motors 3R, 3L. Further, an arrow N illustrates a turning direction of the boat 1 due to a disturbance, and an arrow B denotes a propulsive force which turns the boat 1 by the two outboard motors 3R, 3L.

A computer program (computer software) for executing this control direction is stored in advance in the ROM 22 of the helm controller 20. Then, the CPU 21 of the helm controller 20 reads this computer program from the ROM 22 and executes this program by using the RAM 23 as a work area. Thus, this control method is executed.

In step S301, the helm controller 20 judges whether an operation to move the boat 1 in parallel in a lateral direction (hereinafter referred to as "lateral movement operation") is performed or not. For example, when a tilt of the lever 9 of the joystick 10 rightward or leftward is detected, the helm controller 20 judges that the lateral movement operation is performed.

On the other hand, when it is judged that the lateral movement operation is not performed, the judgment in step S301 is repeated. Note that in this case, the helm controller 20 executes a control according to an operation of the helm 5 or the joystick 10 by the operator.

In step S302, the helm controller 20 executes a control to move the boat 1 in parallel in the lateral direction.

The control when the lever 9 of the joystick 10 is tilted rightward is as follows. As illustrated in Fig. 4A and Fig. 5A, the helm controller 20 instructs the actuator driver 26 to change the rudder angle so that extended lines of propulsive forces P, Q of the two outboard motors 3R, 3L pass a movement center G of the boat 1. Then, the actuator driver 26 changes the rudder angle as described above based on the instruction from the helm controller 20. Thus, the helm controller 20 and the actuator driver 26 make an intersection M of the extended lines of propulsive forces P, Q of the two outboard motors 3R, 3L match the movement center G of the boat 1. For convenience of explanation, the intersection M of extended lines of propulsive forces of the two outboard motors 3R, 3L will be referred to as "propulsive force center M". Moreover, the helm controller 20 instructs the ECM 29 to change the shift positions so that the shift position of the right outboard motor 3R is set to reverse, and the shift position of the left outboard motor 3L is set to forward. Thus, a propulsive force F in a rightward direction applies to the boat 1, and the boat 1 starts to move in parallel in the rightward direction.

On the other hand, the control when the lever 9 of the joystick 10 is tilted leftward is as follows. As illustrated in Fig. 6A and Fig. 7A, similarly to the case of moving in parallel in the rightward direction, the helm controller 20 and the actuator driver 26 make the propulsive force center M of the two outboard motors 3R, 3L match the movement center G of the boat 1. Then, the helm controller 20 instructs the ECM 29 to change the shift positions so that the shift position of the right outboard motor 3R is set to forward, and the shift position of the left outboard motor 3L is set to reverse. Thus, a propulsive force F in a leftward direction applies to the boat 1, and the boat 1 starts to move in parallel in the leftward direction.

Note that for convenience of explanation, as illustrated in each of Fig. 4A, Fig. 5A, Fig. 6A, Fig. 7A, a state that the propulsive force center M of the two outboard motors 3R, 3L matches the movement center G of the boat 1 and the shift positions are in reverse with each other will be referred to as a "standard state".

In step S303, the helm controller 20 judges whether the angular acceleration detected by the angular acceleration sensor 12 is more than or equal to a predetermined threshold.

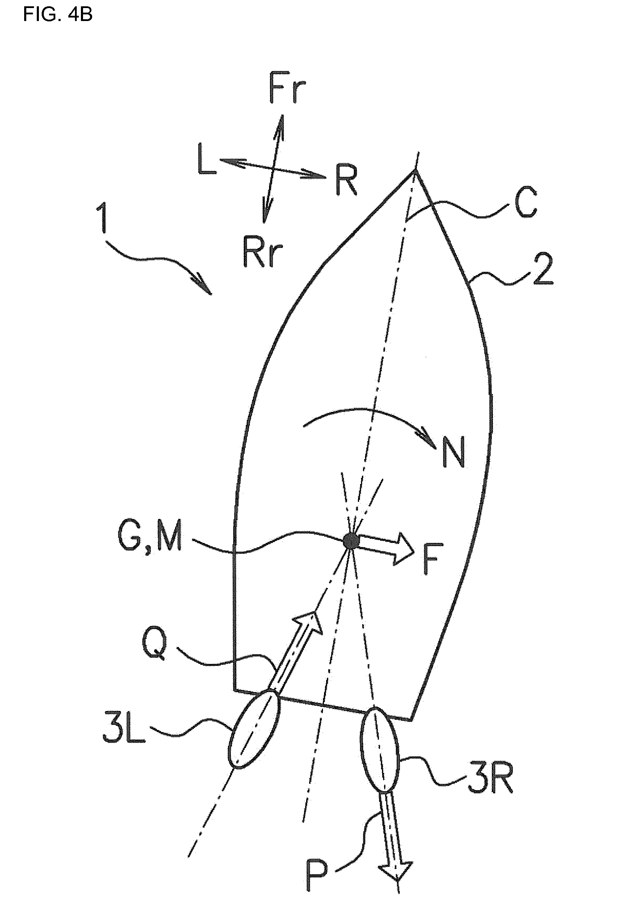

As illustrated in each of Fig. 4B, Fig. 5B, Fig. 6B, Fig. 7B, the boat 1 may start to turn in a horizontal direction after starting a parallel movement in a lateral direction due to a disturbance such as waves, winds or water flows. Accordingly, the helm controller 20 judges whether the angular acceleration detected by the angular acceleration sensor 12 is more than or equal to the predetermined threshold, and assumes that the boat 1 has started to turn when it is more than or equal to the predetermined threshold. Then, in this case, the flow proceeds to step S305. On the other hand, when the angular acceleration is less than the predetermined threshold, the helm controller 20 assumes that the boat 1 is moving in parallel in the lateral direction without turning. Then, in this case, the flow proceeds to step S304.

Note that this predetermined threshold is appropriately set according to accuracy required in the control, and the like.

In step S304, the helm controller 20 keeps the shift positions and the rudder angles of the two outboard motors 3R, 3L in the standard state set in step S302. Thus, the boat 1 continues the parallel movement in the lateral direction. Then, in this case, the flow proceeds to step S312 without undergoing steps S305 to S311.

In steps S305 to S311, the helm controller 20 executes a correction to restore the boat 1 to the direction before starting to turn. Note that contents of the correction differ depending on the direction of parallel movement and the direction of turning of the boat 1. Accordingly, in these steps, the helm controller 20 judges the direction of parallel movement and the direction of turning of the boat 1, and executes the correction according to judgment results.

In step S305, the helm controller 20 judges which of rightward or leftward the lateral movement operation in step S301 is to move the boat 1 in parallel. This judgment is performed based on, for example, a detection result of the operating direction of the lever 9 by the lever sensor of the joystick 10.

Then, when it is a parallel movement in the rightward direction the flow proceeds to step S306, or when it is a parallel movement in the leftward direction the flow proceeds to step S307.

In each of steps S306 and S307, the helm controller 20 judges whether the boat 1 has started to turn right or turn left by using the detection result of the angular acceleration sensor 12. For this judgment, for example, the polarity of output of the angular acceleration sensor 12 is used.

When it is judged that an operation to move the boat 1 in parallel in the rightward direction is performed and the boat 1 starts to turn right, the flow proceeds to step S308.

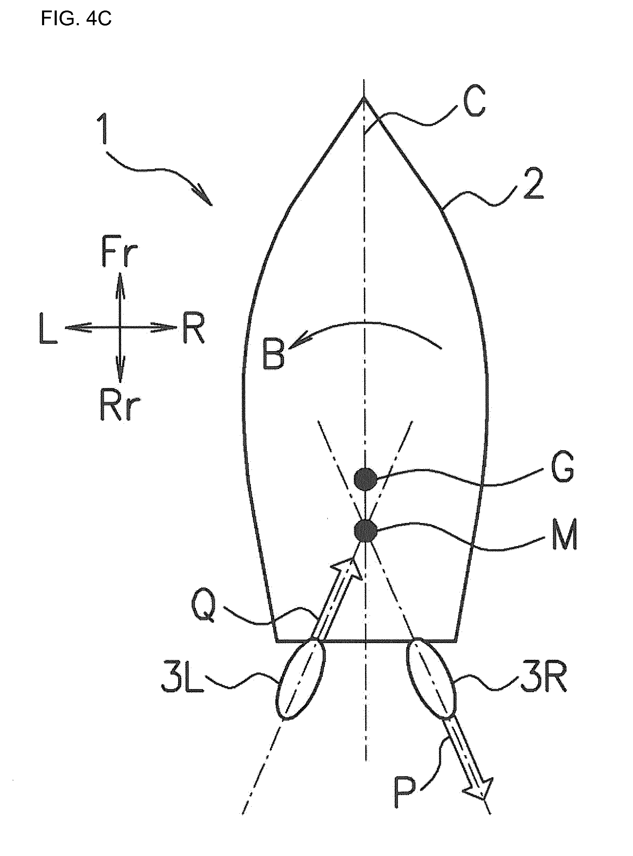

In step S308, the helm controller 20 instructs the actuator driver 26 to correct the rudder angles so that the propulsive force center M of the two outboard motors 3R, 3L is located on the center line C of the boat 1 and on a stern side with respect to the movement center G of the boat 1 as illustrated in Fig. 4C. The actuator driver 26 corrects the rudder angles as described above based on the instruction from the helm controller 20.

Thus, a propulsive force B to turn left is applied to the boat 1 by the two outboard motors 3R, 3L. Therefore, the boat 1 returns to the direction before starting to turn due to a disturbance.

When it is judged that an operation to move the boat 1 in parallel in the rightward direction is performed and the boat 1 starts to turn left, the flow proceeds to step S309.

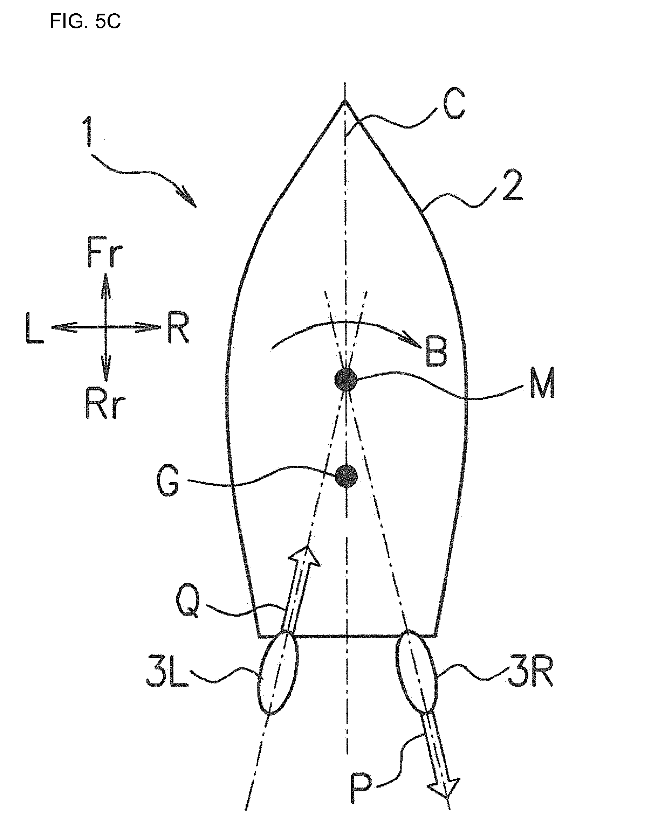

In step S309, the helm controller 20 instructs the actuator driver 26 to correct the rudder angles so that the propulsive force center M of the two outboard motors 3R, 3L is located on the center line C of the boat 1 and on a bow side with respect to the movement center G of the boat 1 as illustrated in Fig. 5C. The actuator driver 26 corrects the rudder angles as described above based on the instruction from the helm controller 20.

Thus, a propulsive force B to turn right is applied to the boat 1 by the two outboard motors 3R, 3L. Therefore, the boat 1 returns to the direction before starting to turn due to a disturbance.

When it is judged that an operation to move the boat 1 in parallel in the leftward direction is performed and the boat 1 starts to turn right, the flow proceeds to step S310.

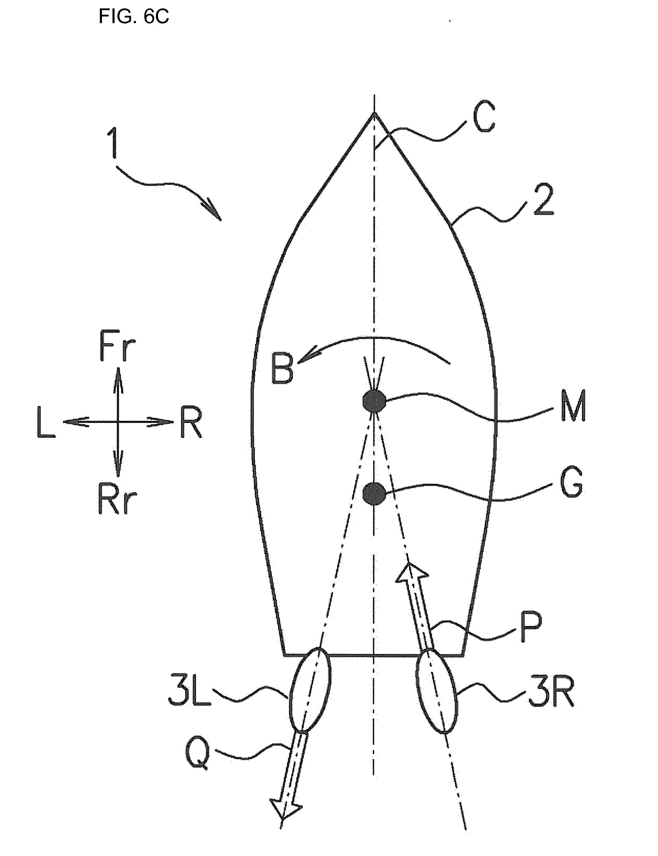

In step S310, the helm controller 20 instructs the actuator driver 26 to correct the rudder angles so that the propulsive force center M of the two outboard motors 3R, 3L is located on the center line C of the boat 1 and on the bow side with respect to the movement center G of the boat 1 as illustrated in Fig. 6C. The actuator driver 26 corrects the rudder angles as described above based on the instruction from the helm controller 20.

Thus, the propulsive force B to turn left is applied to the boat 1 by the two outboard motors 3R, 3L. Therefore, the boat 1 returns to the direction before starting to turn due to a disturbance.

When it is judged that an operation to move the boat 1 in parallel in the leftward direction is performed and the boat 1 starts to turn left, the flow proceeds to step S311.

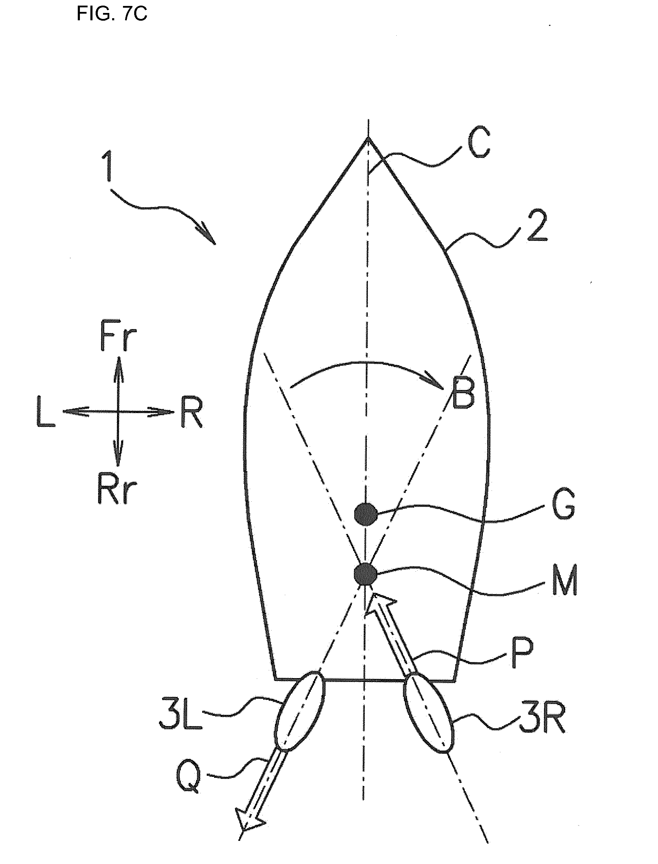

In step S311, the helm controller 20 instructs the actuator driver 26 to correct the rudder angles so that the propulsive force center of the two outboard motors 3R, 3L is located on the center line C of the boat 1 and on the stern side with respect to the movement center G of the boat 1 as illustrated in Fig. 7C. The actuator driver 26 corrects the rudder angles as described above based on the instruction from the helm controller 20.

Thus, the propulsive force to turn right is applied to the boat 1 by the two outboard motors 3R, 3L. Therefore, the boat 1 returns to the direction before starting to turn due to a disturbance.

As described above, in steps S305 to S311, the direction of the boat 1 is corrected, and the boat 1 continues the parallel movement in the lateral direction without turning. Note that the helm controller 20 does not change the propulsive forces of the two outboard motors 3R, 3L when correcting the rudder angles in steps S308 to S311. Further, in steps S308 to S311, the helm controller 20 sends to the actuator driver 26 an instruction to change the rudder angles so that the propulsive force center M of the two outboard motors 3R, 3L does not deviate from the center line C of the boat 1.

In step S312, the helm controller 20 judges whether the operator finished the lateral movement operation or not. For example, when returning of the lever 9 of the joystick 10 to the neutral position is detected by the lever sensor, the helm controller 20 judges that the lateral movement operation by the operator is finished.

When it is judged that the operation of parallel movement in the lateral direction is not finished, the flow returns to step S303 and repeats the operation in S303, and so on.

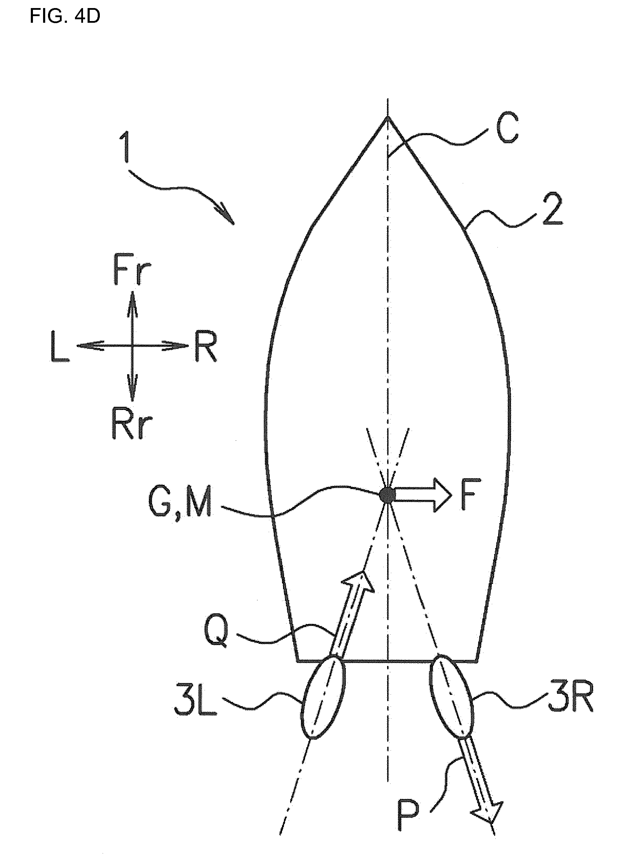

Note that when proceeded once to step S305, and so on, returned again to step S303, and judged that the angular acceleration is less than the predetermined threshold, the helm controller 20 judges that the boat 1 has returned to the direction before turning by the correction. Then, as illustrated in each of Fig. 4D, Fig. 5D, Fig. 6D, Fig. 7D, the helm controller 20 instructs the actuator driver 26 to change the rudder angles so as to restore the state of the two outboard motors 3R, 3L to the standard state. Thus, the boat 1 continues the parallel movement in the lateral direction in a state that its direction is corrected.

When it is judged that the lateral movement operation is finished, the flow proceeds to step S313. In step S313, the helm controller 20 makes the rudder angles and the shift position of the two outboard motors 3R, 3L return to the state before the lateral movement operation.

As described above, according to the embodiment of the present invention, when the boat 1 turns while moving in parallel in a lateral direction, a propulsive force to turn in the reverse direction of the turning direction can be applied to the boat 1, so as to correct the direction of the boat 1. Therefore, the boat 1 can be moved in parallel without turning.

Further, when the rudder angles are changed to correct the direction of the boat 1, the propulsive forces of the two outboard motors 3R, 3L are not changed. With such a structure, since there is no change in propulsive forces applied to the boat 1, a rapid change in behavior of the boat 1 can be prevented. Therefore, the behavior of the boat 1 can be made stable.

Moreover, the propulsive force center M of the two outboard motors 3R, 3L is always located on the center line C of the boat 1. Thus, a rapid change in behavior of the boat 1 can be prevented. Therefore, the behavior of the boat 1 can be made stable.

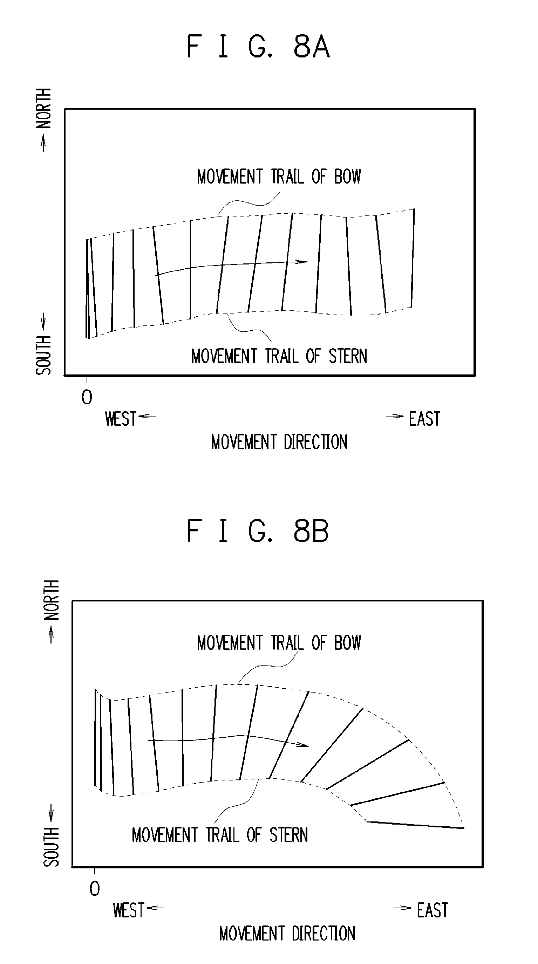

Next, verification results of effects of the present invention will be described with reference to Fig. 8A and Fig. 8B. Fig. 8A is a diagram schematically illustrating a behavior of a boat according to an example of the present invention. Fig. 8B is a diagram schematically illustrating a behavior of a boat according to a comparative example. In Fig. 8A and Fig. 8B, dashed lines denote movement trails of the bow and the stern, and solid lines denote the center line of the boat. The present inventors performed an experiment such that in a state that the bow is directed to the north and the stern is directed to the south, the boat is moved in parallel toward the east, and the behavior of the boat is observed.

As illustrated in Fig. 8A, in the example of the present invention, the boat moved in parallel toward the east in a state that the boat keeps the posture with its bow being oriented to substantially the north while slightly rolling in a leftward and rightward direction. On the other hand, as illustrated in Fig. 8B, in the comparative example, the boat started to turn in a rightward direction in middle of movement, and finally turned more than 90° from the time of starting movement. Thus, in the example of the present invention, it was confirmed that the boat can be moved in parallel in a lateral direction while preventing turning of the boat.

In the foregoing, the embodiments of the present invention have been described in detail, but the above embodiments merely illustrate specific examples for carrying out the present invention. The technical scope of the invention should not be construed as limited by the embodiments. That is, the invention may be embodied in other various forms without departing from the technical ideas or principal features thereof.

This embodiment can be realized by a computer executing a program. Further, a computer readable recording medium which stores the above-described program and a computer program product of the above-described program, or the like can also be applied as an embodiment of the present invention. As the recording medium, for example, a flexible disk, a hard disk, an optical disk, a magneto-optical disk, a CD-ROM, a magnetic tape, a non-volatile memory card, a ROM, and so on can be used.

### INDUSTRIAL APPLICABILITY

The present invention presents technologies effective for a control system for a boat, a control method for a boat, and a program. Then, according to the present invention, when the boat turns while moving in parallel in a lateral direction, a propulsive force to turn in the reverse direction of the turning direction can be applied to the boat. Therefore, the posture of the boat can be corrected, and the boat can be moved in parallel without turning.

## Claims

1. A control system for a boat which has at least two outboard motors and is capable of moving the boat in parallel in a lateral direction, the control system comprising:
a control means which moves the boat in parallel in a lateral direction by performing steering so that extended lines of propulsive forces of the two outboard motors pass a movement center located on a center line of the boat, and causing shift directions of the two outboard motors to be reversed from each other;
a turn judging means which judges whether or not the boat is turning in a horizontal direction; and
a correcting means which moves an intersection of the extended lines of propulsive forces of the two outboard motors and the center line of the boat in a direction of either forward or backward from the movement center when the turn judging means judges that the boat is turning while the boat is moved in parallel in the lateral direction.

2. A control method for a boat which has at least two outboard motors and is capable of moving the boat in parallel in a lateral direction, the control method comprising the steps of:
moving the boat in parallel in a lateral direction by performing steering so that extended lines of propulsive forces of the two outboard motors pass a movement center located on a center line of the boat, and causing shift directions of the two outboard motors to be reversed from each other;
judging whether or not the boat is turning in a horizontal direction; and
moving an intersection of the extended lines of propulsive forces of the two outboard motors and the center line of the boat in a direction of either forward or backward from the movement center when it is judged that the boat is turning while the boat is moved in parallel in the lateral direction.

3. A program causing a computer of a control system for a boat which has at least two outboard motors and is capable of moving the boat in parallel in a lateral direction to execute the steps of:
moving the boat in parallel in a lateral direction by performing steering so that extended lines of propulsive forces of the two outboard motors pass a movement center located on a center line of the boat, and causing shift directions of the two outboard motors to be reversed from each other;
judging whether or not the boat is turning in a horizontal direction; and
moving an intersection of the extended lines of propulsive forces of the two outboard motors and the center line of the boat in a direction of either forward or backward from the movement center when it is judged that the boat is turning while the boat is moved in parallel in the lateral direction.
